# EUROPÄISCHE PATENTSCHRIFT

(11) **EP 2 214 980 B1**
(45) Veröffentlichungstag und Bekanntmachung des Hinweises auf die Patenterteilung: **22.02.2012**
(21) Anmeldenummer: 08855336.7
(22) Anmeldetag: 19.11.2008
(51) Int. Cl.: B65D 75/28, B32B 15/08, B65D 85/76, B32B 15/20

(54) **FOLIENVERPACKUNG**
FOIL PACKAGING
EMBALLAGE PELLICULÉ

(30) Priorität: 27.11.2007 EP 07405337
(43) Veröffentlichungstag der Anmeldung: 11.08.2010
(73) Patentinhaber: Amcor Flexibles Kreuzlingen Ltd., 8280 Kreuzlingen (CH)
(72) Erfinder: PIERRON, Eliane, F-57400 Imling (FR); CERF, Sabine, F-57400 Sarrebourg (FR)
(74) Vertreter: Gernet, Samuel Andreas
(86) Internationale Anmeldenummer: PCT/EP2008/009776
(87) Internationale Veröffentlichungsnummer: WO 2009/068208

(56) Entgegenhaltungen:
- WO-A-94/19184
- CH-A- 456 445

## Beschreibung

Die Erfindung betrifft eine Folienverpackung nach dem Oberbegriff des Anspruchs 1.

Zur Verpackung von kleinen Portionen Weich- oder Schmelzkäse in der Form von Würfeln Dreiecken, Tetraedern und anderen, für die Verpackung kleiner Massen geeigneten Designs, wie sie etwa als Häppchen bei einem Apéro serviert werden, sind Folienverpackungen aus beschichteten Aluminiumfolien bekannt. Der Käse wird auf einer Abpackmaschine in schmelzflüssigem oder pastösem Zustand portionenweise in aus einer Behälterfolie geformte, oben offene Behälter gefüllt. Nach dem Auflegen von aus einer Deckelfolie geschnittenen Deckeln auf das Füllgut in den offenen Behältern erfolgt ein dichtes Verschliessen durch eine Heisssiegelung der Deckel gegen die Behälter entlang eines umlaufenden Streifens des nach innen gegen den Deckel umgelegten Behälterrandes.

Bisher wurden die für Folienverpackungen der vorstehend erwähnten Art verwendeten Aluminiumfolien zum Schutz gegen Korrosion und zur Verbesserung der Haftung von Siegellacken mit einem Grundlack oder Primer lackiert. Damit lässt sich jedoch eine optisch störende Oberflächenkorrosion der Aluminiumfolie infolge Migration korrosiv wirkender Bestandteile der Käsemasse durch die Lackschichten nicht in jedem Fall vermeiden.

Der Erfindung liegt die Aufgabe zugrunde, eine Folienverpackung der eingangs genannten Art zu schaffen, bei der die Aluminiumfolie wirksam gegen Korrosion geschützt ist und eine gute Haftung gegenüber Heisssiegellacken aufweist.

Zur erfindungsgemässen Lösung der Aufgabe führt Folienverpackung mit den Merkmalen des Anspruchs 1.

Der wesentliche Vorteil der lonomerschicht gegenüber einem herkömmlichen Primer auf Lackbasis liegt darin, dass sehr dünne Filme hergestellt werden können, die sich durch eine hohe mechanische Stabilität auszeichnen und die darunter liegende Aluminiumfolie wirksam gegen Korrosion schützen. Daneben bildet die dünne lonomerschicht auf der Aluminiumfolie einen ausgezeichneten Haftgrund für Heisssiegelschichten.

Der Heisssiegellack ist zweckmässigerweise ein Niedertemperatur-Siegellack, d.h. ein Siegellack, der bereits bei Temperaturen ab z. B. 50 °C siegelt.

Die Aluminiumfolie der Behälterfolie und der Deckelfolie ist bevorzugt mit einem Flächengewicht von 2 bis 8 g/ m² mit dem Polymer beschichtet.

Die Dicke der Aluminiumfolie der Behälterfolie und der Deckelfolie beträgt bevorzugt 6 bis 12 µm.

Das lonomer ist z. B. ein Ethylen / Acrylsäure / Zink oder Natrium lonomer oder ein Zinkacrylat Terionomer. Ein geeignetes lonomer ist das unter der Markenbezeichnung Surlyn 1857 bekannte Produkt.

Die erfindungsgemässe Folienverpackung eignet sich insbesondere zur Verpackung weicher Nahrungsmittelmassen, insbesondere in der Form eines Quaders bzw. Würfels. Geeignete weiche Nahrungsmittelmassen sind neben Weich- bzw. Schmelzkäse z.B. Bonbons.

Die Aluminiumfolie der erfindungsgemässen Folienverpackung weist ausgezeichnete, für Verpackungen der vorgenannten Art erforderliche Dead Fold Eigenschaften auf.

Die erfindungsgemässe Folienverpackung kann zusätzlich mit aus dem Stand der Technik bekannten Öffnungshilfen, wie z. B. Aufreissstreifen- oder -fäden, oder durch Orientierung der Folie in Aufreissrichtung, ausgestattet sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: eine Schrägsicht auf eine würfelförmige Folienverpackung;
- Fig. 2: einen senkrechten Schnitt durch die Folienverpackung von Fig. 1 nach deren Line I-I mit einer ersten Ausführungsform eines Deckels;
- Fig. 3: einen senkrechten Schnitt durch die Folienverpackung von Fig. 1 nach deren Line I-I mit einer zweiten Ausführungsform eines Deckels;
- Fig. 4: einen Querschnitt durch die Behälterfolie der Folienverpackung von Fig. 2;
- Fig. 5 - 8: einen Querschnitt durch verschiedene Ausführungsformen von Deckelfolien für die Behälterfolie von Fig. 4;
- Fig. 9: einen Querschnitt durch die Behälterfolie der Folienverpackung von Fig. 3;
- Fig. 10: einen Querschnitt durch eine Deckelfolie für die Behälterfolie von Fig. 9.

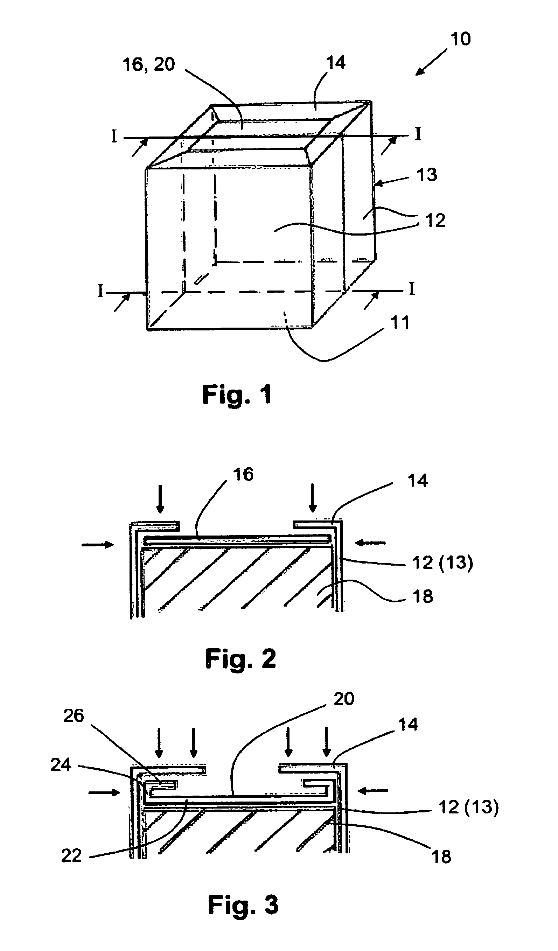

Eine in Fig. 1 dargestellte würfelförmige Folienverpackung 10 für weiche Füllgutmassen 18, wie z. B. Schmelz- oder Weichkäse in der Form von Aperowürfeln, umfasst einen Behälter 13 mit einer Bodenfläche 11 mit von dieser aufragenden Seitenwänden 12, deren freie Ränder unter Bildung eines umlaufenden Siegelrandes 14 um einen Winkel von 90° nach innen umgelegt sind. Von der Innenseite der Verpackung ist ein Deckel 16, 20 gegen den Siegelrand 14 heiss gesiegelt.

Die in Fig. 2 dargestellte Folienverpackung 10 weist einen Deckel 16 mit ungefalteter, ebener quadratischer Deckfläche auf. Die mit Pfeilen dargestellte Heisssiegelung des Deckels 16 gegen den Siegelrand 14 des Behälters 13 erfolgt mit entsprechenden Siegelwerkzeugen von oben und von der Seite gegen die Füllgutmasse 18, die vorgängig in flüssiger Form in die auf einer Verpackungsmaschine aus einer Behälterfolie 30 vorgeformten, oben offenen Behälter 13 portioniert eingefüllt wird.

Grundsätzlich ist es möglich, durch geeignete Wahl eines auf die Einfülltemperatur des Füllgutes abgestimmten Niedertemperatur-Siegellackes eine Siegelung durch die beim Abfüllen heisse Füllgutmasse 18 ohne Siegelwerkzeug bereits bei einer Füllguttemperatur ab etwa 50 °C zu erreichen.

Bei der in Fig. 3 gezeigten Ausführungsform einer Folienverpackung 10 weist der Deckel 20 eine quadratische Basisfläche 22 mit zweimal um einen Winkel von 90° nach oben und innen umgelegten Rändern mit nach innen gerichteten Schnittkanten 23 auf, so sich dass zu den Seitenwänden 12 des Behälters 13 parallele Seitenflächen 24 und zum Siegelrand 14 des Behälters 13 parallele Siegelflächen 26 ergeben. Wie im Beispiel von Fig. 2 erfolgt die mit Pfeilen dargestellte Heisssiegelung des Deckels 20 gegen den Siegelrand 14 des Behälters 13 mit entsprechenden Siegelwerkzeugen von oben und von der Seite Seiten gegen die Füllgutmasse 18, die vorgängig in flüssiger Form in die auf einer Verpackungsmaschine aus einer Behälterfolie 30 vorgeformten, oben offenen Behälter 13 portioniert eingefüllt wird.

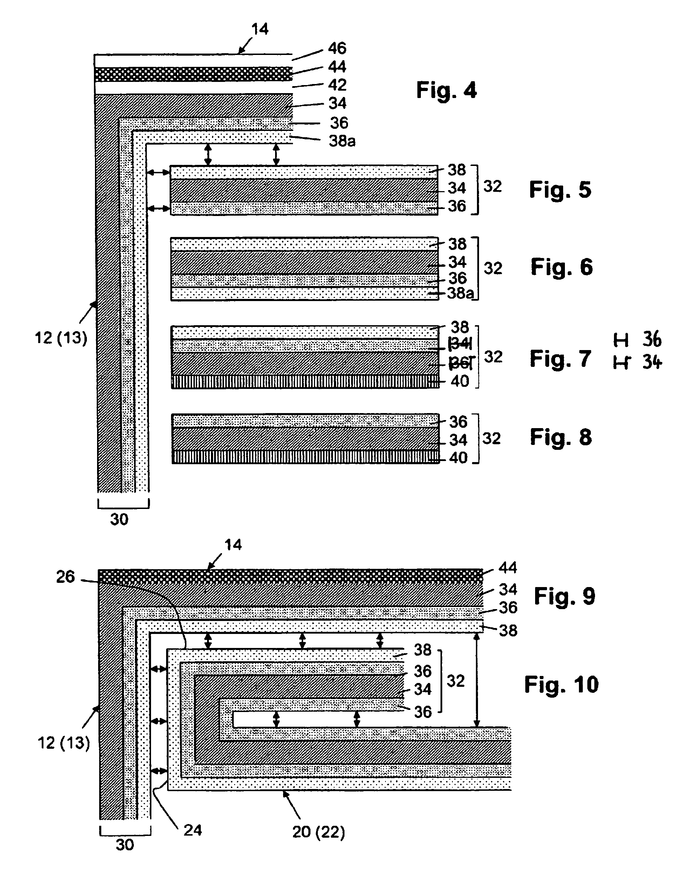

Eine in Fig. 4 gezeigte Behälterfolie 30 mit einer Aluminiumfolie 34 weist auf der bei der Folienverpackung 10 nach aussen gerichteten Seite der Aluminiumfolie 34 nacheinander eine Vorlackschicht 42, eine Bedruckung 44 und eine aussenseitige Schutzlackschicht 46 auf.

Auf der gegen die Füllgutmasse 18 gerichteten Siegelseite ist die Aluminiumfolie 34 mit einem durch Extrusionsbeschichten aufgetragenen lonomer 36 beschichtet. Die lonomerschicht 36 dient hier sowohl als Primer für eine Niedertemperatur-Heisssiegelschicht 38a als auch als Korrosionsschutzschicht.

Eine erste zur Herstellung des Deckels 16 verwendete Deckelfolie 32 weist gemäss Fig. 5 eine Aluminiumfolie 34 auf, deren Siegelseite mit einem Heisssiegellack 38 beschichtet ist. Die gegen die Füllgutmasse 18 gerichtete Seite der Aluminiumfolie 34 ist mit einem durch Extrusionsbeschichten aufgetragenen lonomer 36 beschichtet. Die lonomerschicht 36 übernimmt hier die Funktion einer Korrosionsschutzschicht.

Bei einer Kombination der Behälterfolie 30 von Fig. 4 und der Deckelfolie 32 von Fig. 5 erfolgt die Siegelung im Bereich der Siegelränder 14 zwischen der Niedertemperatur-Heisssiegelschicht 38a der Behälterfolie 30 und der Heisssiegelschicht 38 der Deckelfolie 32.

Eine zweite zur Herstellung des Deckels 16 verwendete Deckelfolie 32 weist gemäss Fig. 6 eine Aluminiumfolie 34 auf, deren Siegelseite mit einem Heisssiegellack 38 beschichtet ist Die gegen die Füllgutmasse 18 gerichtete Seite der Aluminiumfolie 34 ist mit einem durch Extrusionsbeschichten aufgetragenen lonomer 36 beschichtet. Die lonomerschicht 36 dient hier als Primer für eine Niedertemperatur-Heisssiegelschicht 38a und als Korrosionsschutzschicht.

Bei einer Kombination der Behälterfolie 30 von Fig. 4 und der Deckelfolie 32 von Fig. 6 erfolgt die Siegelung im Bereich der Siegelränder 14 zwischen der Niedertemperatur-Heisssiegelschicht 38a der Behälterfolie 30 und der Heisssiegelschicht 38 der Deckelfolie 32. Eine weitere Siegelung erfolgt zwischen der Niedertemperatur-Heisssiegelschicht 38a der Behälterfolie 30 und der Niedertemperatur-Heisssiegelschicht 38a der Deckelfolie 32 im Bereich der Seitenwände 12 des Behälters 13. Die Siegeltemperatur liegt bei einem Niedertemperatur-Heisssiegellack je nach Zusammensetzung zwischen etwa 50° und 120°C.

Eine dritte zur Herstellung des Deckels 16 verwendete Deckelfolie 32 weist gemäss Fig. 7 eine Aluminiumfolie 34 auf, deren Siegelseite mit einem durch Extrusionsbeschichten aufgetragenen lonomer 36 beschichtet ist. Die lonomerschicht 36 dient hier als Primer für eine Heisssiegelschicht 38. Die gegen die Füllgutmasse 18 gerichtete Seite der Aluminiumfolie ist mit einer konventionellen Korrosionsschutzschicht 40 versehen.

Bei einer Kombination der Behälterfolie 30 von Fig. 4 und der Deckelfolie 32 von Fig. 7 erfolgt die Siegelung im Bereich der Siegelränder 14 zwischen der Niedertemperatur-Heisssiegelschicht 38a der Behälterfolie 30 und der Heisssiegelschicht 38 der Deckelfolie 32.

Eine vierte zur Herstellung des Deckels 16 verwendete Deckelfolie 32 weist gemäss Fig. 8 eine Aluminiumfolie 34 auf, deren Siegelseite mit einem durch Extrusionsbeschichten aufgetragenen lonomer 36 beschichtet ist. Die gegen die Füllgutmasse 18 gerichtete Seite der Aluminiumfolie ist mit einem konventionellen Korrosionsschutzlack 40 beschichtet.

Bei einer Kombination der Behälterfolie 30 von Fig. 4 und der Deckelfolie 32 von Fig. 8 erfolgt die Siegelung im Bereich der Siegelränder 14 zwischen der Niedertemperatur-Heisssiegelschicht 38a der Behälterfolie 30 und der lonomerschicht 36 der Deckelfolie 32.

Eine weitere in Fig. 9 gezeigte Behälterfolie 30 mit einer Aluminiumfolie 34 weist auf der bei der Folienverpackung 10 nach aussen gerichteten Seite der Aluminiumfolie 34 eine Bedruckung 44 auf.

Auf der gegen die Füllgutmasse 18 gerichteten Siegelseite ist die Aluminiumfolie 34 mit einem durch Extrusionsbeschichten aufgetragenen lonomer 36 beschichtet. Die lonomerschicht 36 dient hier als Primer für eine Heisssiegelschicht 38.

Eine zur Herstellung des Deckels 20 verwendete Deckelfolie 32 weist gemäss Fig. 10 eine Aluminiumfolie 34 auf, die auf der gegen die Füllgutmasse 18 gerichteten Seite mit einem durch Extrusionsbeschichten aufgetragenen lonomer 36 als Primer für einen Heisssiegellack 38 beschichtet ist. Durch die zweimal um einen Winkel von 90° nach oben und innen umgelegten Ränder des Deckels 20 bildet die mit dem Heisssiegellack 38 beschichtete Seite die gegen die Behälterfolie 30 gerichteten Siegelflächen 26. Auf der gegen das Füllgut 18 gerichteten Seite der Deckelfolie 32 übernimmt die lonomerschicht 36 zusätzlich die Funktion einer Korrosionsschutzschicht.

Bei einer Kombination der Behälterfolie 30 von Fig. 9 und der Deckelfolie 32 von Fig. 10 erfolgt die Siegelung im Bereich der Siegelflächen 26 und der Seitenflächen 24 des Deckels 20 zwischen der Heisssiegelschicht 38 der Behälterfolie 30 und der Heisssiegelschicht 38 der Deckelfolie 32. Eine weitere Siegelung erfolgt zwischen der lonomerschicht 36 des die Siegelflächen 26 bildenden, umgelegten Randes und der lonomerschicht der darunter liegenden Basisfläche 22 des Deckels 20, sowie zwischen der Heisssiegelschicht 38 der Behälterfolie 30 und der lonomerschicht 36 der darunter liegenden Deckelschicht 32 in dem die Siegelflächen 26 des Deckels 20 überragenden Bereich des Siegelrandes 14 des Behälters 13.

In den Beispielen der Fig. 4 bis 8 liegt die Dicke der Aluminiumfolie bevorzugt etwa zwischen 5 und 9 µm, insbesondere zwischen etwa 6 und 8 µm, und in den Beispielen der Fig. 9 und 10 bevorzugt zwischen etwa 9 und 15 µm, insbesondere zwischen etwa 11 und 13 µm. Die Dicke der lonomerschicht 36 hat in allen Beispielen ein bevorzugtes Flächengewicht von etwa 1 - 10 g/m², insbesondere etwa 2 - 8 g/m².

Anstelle einer Extrusionsbeschichtung kann die lonomerschicht 36 auch in der Form einer wässrigen Emulsion auf die Aluminiumfolie 34 aufgetragen und nachfolgend zur Filmformung bei einer Temperatur von etwa 80° getrocknet werden. Ein geeignetes lonomer ist beispielsweise Surlyn 1857.

Zur Herstellung der Heisssiegelschicht 38 können beispielsweise Heisssiegellacke auf Acrylat- oder Vinylacetatbasis eingesetzt werden.

## Patentansprüche

1. Folienverpackung für weiche Nahrungsmittelmassen, mit einer zu einem offenen Behälter (13) geformten Behälterfolie (30) mit einer Heisssiegelschicht (38) und einer gegen die Heisssiegelschicht (38) der Behälterfolie (30) gesiegelten, den Behälter (13) mit einem Deckel (16,20) verschliessenden Deckelfolie (32), wobei die Behälterfolie (30) und die Deckelfolie (32) mehrschichtig aufgebaut sind und eine der Schichten eine optional einseitig vorlackierte und ggf. bedruckte und überlackierte Aluminiumfolie (34) ist,
**dadurch gekennzeichnet, dass**
die Aluminiumfolie (34) der Behälterfolie (30) und der Deckelfolie (32) eine Dicke von 5 bis 15 µm aufweist und mit einem lonomer (36) mit einem Flächengewicht von 1 bis 10 g/m² beschichtet ist, wobei die Heisssiegelschicht (38) auf der lonomerschicht (36) der Behälterfolie (30) angeordnet ist und alternativ
a) auf der Aluminiumfolie (34) der Deckelfolie (32) auf der Siegelseite das optional mit Heisssiegellack (38) beschichtete lonomer (36) und auf der anderen Seite der Aluminiumfolie (34) eine ggf. aus einem polymer bestehende Korrosionsschutzschicht (40) angeordnet ist, oder
b) die Aluminiumfolie (34) der Deckelfolie (32) auf der Siegelseite mit Heisssiegellack (38) beschichtet und auf der anderen Seite der Aluminiumfolie (34) die ggf. mit Heisssiegellack (38) beschichtete lonomerschicht (36) angeordnet ist.

2. Folienverpackung nach Anspruch 1, **dadurch gekennzeichnet, dass** die Aluminiumfolie (34) der Behälterfolie (30) und der Deckelfolie (32) eine Dicke von 6 bis 12 µm aufweist.

3. Folienverpackung nach Anspruch 1 oder 2, **dadurch gekennzeichnet, dass** die Aluminiumfolie (34) der Behälterfolie (30) und der Deckelfolie (32) mit einem Flächengewicht von 2 bis 8 g/m² mit dem lonomer (36) beschichtet ist.

4. Folienverpackung nach einem der Ansprüche 1 bis 3, **dadurch gekennzeichnet, dass** der Heisssiegellack (38) ein Niedertemperatur-Siegellack mit einer zwischen 50° und 120°C liegenden Siegeltemperatur ist.

## Claims

1. Foil packaging for soft foods, comprising a container film (30) shaped to form an open container (13) having a heat sealing layer (38) and a lid film (32) which is sealed against the heat sealing layer (38) of the container film (30) and closes the container (13) with a lid (16, 20), the container film (30) and the lid film (32) being multilayered and one of the layers being an aluminium foil (34), which is optionally provided with an undercoat on one side, and if appropriate printed, and provided with a top coat,
**characterised in that**
the aluminium foil (34) of the container film (30) and of the lid film (32) has a thickness of 5 to 15 µm and is coated with an ionomer (36) at a weight per unit area of 1 to 10 g/m², the heat sealing layer (38) being arranged on the ionomer layer (36) of the container film (30), and alternatively
a) the ionomer (36), optionally coated with heat sealing lacquer (38), being arranged on the aluminium foil (34) of the lid film (32) on the sealing side, and a corrosion protection layer (40), if appropriate consisting of a polymer, being arranged on the other side of the aluminium foil (34), or
b) the aluminium foil (34) of the lid film (32) being coated with heat sealing lacquer (38) on the sealing side and the ionomer layer (36), if appropriate coated with heat sealing lacquer (38), being arranged on the other side of the aluminium foil (34).

2. Foil packaging according to claim 1, **characterised in that** the aluminium foil (34) of the container film (30) and of the lid film (32) has a thickness of 6 to 12 µm.

3. Foil packaging according to either claim 1 or claim 2, **characterised in that** the aluminium foil (34) of the container film (30) and of the lid film (32) is coated with the ionomer (36) at a weight per unit area of 2 to 8 g/m².

4. Foil packaging according to any one of claims 1 to 3, **characterised in that** the heat sealing lacquer (38) is a low-temperature sealing lacquer having a sealing temperature of between 50 °C and 120 °C.

## Revendications

1. Emballage pelliculé pour des masses alimentaires molles, avec une pellicule de récipient (30) façonnée en un récipient ouvert (13) avec une couche de thermoscellement (38) et une pellicule de couvercle scellée contre la couche de thermoscellement (38) de la pellicule de récipient (30), fermant le récipient (13) avec un couvercle (16, 20), la pellicule de récipient (30) et la pellicule de couvercle (32) étant constituées de plusieurs couches et une des couches étant une pellicule d'aluminium (34) prélaquée en option sur un côté et éventuellement imprimée et laquée en surface,
**caractérisé en ce que**
la pellicule d'aluminium (34) de la pellicule de récipient (30) et de la pellicule de couvercle (32) présente une épaisseur de 5 à 15 µm et est revêtue avec un ionomère (36) avec une masse superficielle de 1 à 10 g/m², la couche de thermoscellement (38) étant disposée sur la couche d'ionomère (36) de la pellicule de récipient (30) et de manière alternative,
a) il est disposé sur la pellicule d'aluminium (34) de la pellicule de couvercle (32) sur le côté de scellement l'ionomère (36) revêtu en option avec une laque de thermoscellement (38) et sur l'autre côté de la pellicule d'aluminium (34) une couche de protection à la corrosion (40) éventuellement constituée d'un polymère, ou
b) la pellicule d'aluminium (34) de la pellicule de couvercle (32) est revêtue sur le côté de scellement d'une laque de thermoscellement (38) et il est disposé sur l'autre côté de la pellicule d'aluminium (34) la couche d'ionomère (36) éventuellement revêtue d'une laque de thermoscellement (38).

2. Emballage pelliculé selon la revendication 1, **caractérisé en ce que** la pellicule d'aluminium (34) de la pellicule de récipient (30) et de la pellicule de couvercle (32) présente une épaisseur de 6 à 12 µm.

3. Emballage pelliculé selon la revendication 1 ou 2, **caractérisé en ce que** la pellicule d'aluminium (34) de la pellicule de récipient (30) et de la pellicule de couvercle (32) est revêtue avec l'ionomère (36) avec une masse superficielle de 2 à 8 g/m2.

4. Emballage pelliculé selon l'une des revendications 1 à 3, **caractérisé en ce que** la laque de thermoscellement (38) est une laque de scellement basse température avec une température de scellement entre 50° et 120°C.
